# EUROPEAN PATENT APPLICATION

(11) **EP 3 130 532 A1**
(43) Date of publication of application: **15.02.2017**
(21) Application number: 15775986.1
(22) Date of filing: 04.04.2015
(51) Int. Cl.: B63H 21/20

(54) **FUEL-ELECTRIC HYBRID POWER DRIVING AND MANAGEMENT SYSTEM, AND UNMANNED VESSEL**

(30) Priority: 07.04.2014 CN 201410136296
(71) Applicant: Shenzhen Yunzhou Innovation Technology Company Ltd, Shenzhen, Guangdong 518057 (CN)
(72) Inventor: ZHANG, Yunfei, Shenzhen Guangdong 518057 (CN); CHENG, Liang, Shenzhen Guangdong 518057 (CN); ZOU, Xuesong, Shenzhen Guangdong 518057 (CN); LIANG, Liang, Shenzhen Guangdong 518057 (CN); ZHOU, Guangyu, Shenzhen Guangdong 518057 (CN); WANG, Genbao, Shenzhen Guangdong 518057 (CN)
(74) Representative: Michalski Hüttermann & Partner Patentanwälte mbB
(86) International application number: PCT/CN2015/000235
(87) International publication number: WO 2015/154545

(57) **Abstract**

Disclosed is a fuel-electric hybrid power driving and management system, which enables fuel and electricity power to be reasonably and automatically switched and which is energy saving and environmentally friendly, and an unmanned vessel. The driving and management system comprises a fuel driving system and at least one electric driving system, wherein the fuel driving system comprises an electronically controlled switch of a fuel engine, the fuel engine, a fuel supply tank and an electronically controlled throttle; and the electric driving system comprises a primary battery pack, a motor and a speed regulating device. The system further comprises a control system and a power management system, wherein the power management system, the speed regulating device, the electronically controlled switch of the fuel engine, and the electronically controlled throttle are all electrically connected to the control system, and the electronically controlled switch of the fuel engine, the fuel engine, the electronically controlled throttle, and the primary battery pack are all connected to the power management system in an electronically controlled manner. The unmanned vessel comprises a hull, both sides of the hull are respectively provided with an impeller which is mounted by a pod, and a communication system is used for communicating with a ground base station.

## Description

### FIELD OF THE INVENTION

The present disclosure relates to a power management system, and more particularly, relates to a fuel-electric hybrid power driving and management system, and an unmanned vessel having the system.

### BACKGROUND OF THE INVENTION

With the gradual increase of environmental protection awareness and as the energy crisis has become increasingly prominent, a power system with lower pollution, lower fuel consumption, and higher efficiency is increasingly desired. In the field of transportation, such as land transportation involving vehicles and water transportation involving ships, new power systems are being applied. For example, a patent application with publication No: CN102602275A discloses a power system for a fuel-electric hybrid vehicle. The system includes an engine, a power motor, a power switching and control system, a battery, and other parts. The power switch and control system is utilized to perform a fuel-electric switch, so as to obtain the purpose of low pollution, low fuel consumption, and high efficiency. In the field of marine technology, most of the power systems adopt a fuel engine to drive an impeller to rotate, and the vessel is driven to move forward by the force generated by the rotation of the impeller. Due to the environmental difference between the land and the waterway, when performing power control in the waterway, not only a power distribution of a power supply system, but also the influence to the system by the water flow and the navigational speed should be considered, when it is driven in the waterway. The domestic application of a pure electric driving system or a fuel-electric hybrid power driving system in the marine field is still in the exploratory stage.

In the marine field, most of the power driving systems of the unmanned vessel adopt a single driving system. If a high speed impetus hydro-motor is adopted to drive the vessel, when the speed of the vessel is relatively low, it has an extremely low efficiency, and the fuel consumption is extremely high. During a transition process of the speed of the vessel from a low speed state to an economical speed state, a huge torque should be outputted by the engine, thus consuming a great deal of fuel. If a driving system adopting fuel-electric hybrid power is designed, which takes into the consideration of the feature of water transportation, and in which the power mode can be switched automatically according to the requirement, the aforementioned problem can be well resolved.

### SUMMARY

The technical problems to be solved by the present disclosure are the shortcomings of the prior art, aiming at providing a fuel-electric hybrid power driving and management system which enables fuel power and electric power to be reasonably and automatically switched, and which is energy saving and environmentally friendly.

The present disclosure further provides an unmanned vessel which is energy saving and can achieve an accurate control.

The technical solution adopted by the fuel-electric hybrid power driving and management system of the present disclosure is that: the fuel-electric hybrid power driving and management system includes a fuel driving system and at least one electric driving system. The fuel driving system includes an electronically controlled switch of a fuel engine, the fuel engine, a fuel supply tank, and an electronically controlled throttle. The electric driving system includes a primary battery pack, a motor, and a speed regulating device. Wherein the system further includes a control system and a power management system, the power management system, the speed regulating device, the electronically controlled switch of the fuel engine, and the electronically controlled throttle are all electrically connected to the control system, and the electronically controlled switch of the fuel engine, the fuel engine, the electronically controlled throttle, and the primary battery pack are all connected to the power management system in an electronically controlled manner.

Further, the system includes a backup battery pack electrically connected to the power management system.

Further, a generator is provided on an output shaft of the fuel engine, the generator is electrically connected to the power management system.

Further, the power management system includes two power management modules, the two power management modules are electrically connected to each other by a DC/DC converter.

Further, a power supply battery pack is connected between the power management module and the control system via the DC/DC converter, the power supply battery pack supplies power for the control system.

The technical solution adopted by the unmanned vessel of the present disclosure is that: the unmanned vessel includes aforementioned fuel-electric hybrid power driving and management system, and further includes a hull. Opposite sides of the hull are respectively provided with an impeller which is mounted by a pod, a number of the electric driving systems is two, the two electric driving systems work independently and supply power for the impellers on opposite sides of the hull, respectively. In the hull, a communication system is provided, the communication system is electrically connected to the control system, and the control system communicates with a ground base station via the communication system.

The advantages of the present disclosure are that: in the present disclosure, the fuel engine serves as a primary power, and it can, according to needs, distribute a part of power to drive the generator to produce electricity, which is provided to the primary battery pack for charging. The two electric driving systems are employed to perform an electrical driving. At the starting of the system, the primary battery pack is in a fully charged state, the output electricity is supplied to the two electric driving systems, and the fuel driving system does not need to work. The system is then continuously adjustable at a maximum forward speed. In addition, by using the two independent electric driving systems to drive the vessel, a differential control can be attained. When the system is operated at a high speed, the fuel driving system works, while the electric driving system stops or provides a subsidiary work, and the fuel engine starts to charge the primary battery pack via the generator. In the present disclosure, when the vessel is transited from a low speed state to an economical speed state, which requires a relatively great efficiency, the electric driving system is employed to drive, a greater output torque can be provided when in a low speed. A high speed drive can be provided by the fuel driving system when the vessel is in a high speed, and an automatic switch can be realized, such that the whole system has a lower noise and a lower discharge during operation. At the same time, a great and stable power output can be obtained at the low speed, thus a differential control can be realized, and the control of the system becomes more accurate. The whole system has lower energy consumption during operation, and the energy consumption tends to be more reasonable, and requirements for energy conservation and environment protection can be met.

The system further includes a backup battery pack, which is electrically connected to the power management system, therefore the power management system of the present disclosure can switch between the primary battery pack and the backup battery pack. A seamless switch between the primary battery pack and the backup battery pack is realized, so as to better match the operation of the system.

### BRIEF DESCRIPTION OF THE DRAWINGS

FIG. 1 is a principle schematic view of the present disclosure.
FIG. 2 is a working flowchart of an unmanned vessel of the present disclosure.

### DETAILED DESCRIPTION OF THE EMBODIMENTS

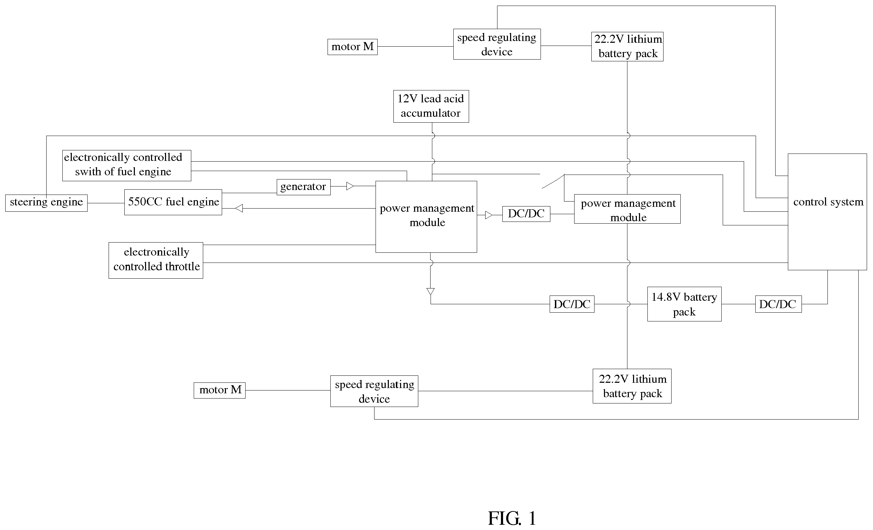

As shown in FIG. 1, the fuel-electric hybrid power driving and management system includes a fuel driving system and at least one electric driving system, the fuel driving system includes an electronically controlled switch of a fuel engine, the fuel engine, a fuel supply tank and an electronically controlled throttle. The electric driving system includes a primary battery pack (i.e. the battery pack supplies a main power), a motor, and a speed regulating device. The speed regulating device includes a gearbox, a clutch and so on. The system further includes a control system and a power management system, the power management system includes a central chip and a transmission interface, the transmission interface is connected to the central chip. The transmission interface is configured to connect external devices. The power management system, the speed regulating device, the electronically controlled switch of the fuel engine, and the electronically controlled throttle are all electrically connected to the control system, the electronically controlled switch of the fuel engine, the fuel engine, the electronically controlled throttle, and the primary battery pack are all connected to the power management system in an electronically controlled manner. In the illustrated embodiment, the primary battery pack is a 22.2 volts lithium battery pack. The system further includes a backup battery pack, the backup battery pack is electrically connected to the power management system. The backup battery pack is a 12 volts lead acid accumulator. A generator is provided on an output shaft of the fuel engine, the generator is electrically connected to the power management system. The power management system includes two power management modules, the two power management modules are electrically connected to each other by a DC/DC converter, a power supply battery pack is connected between the power management module and the control system via the DC/DC converter, the power supply battery pack supplies power for the control system. The power supply battery pack power is a 14.8 volts battery pack.

In the present disclosure, the unmanned vessel includes aforementioned fuel-electric hybrid power driving and management system, and further includes a hull, opposite sides of the hull are respectively provided with an impeller which is mounted by a pod, a number of the electric driving system is two, the two electric driving systems work independently and supply power for the impellers on opposite sides of the hull, respectively. In the hull, a communication system is further provided. The communication system is electrically connected to the control system. The control system communicates with a ground base station via the communication system.

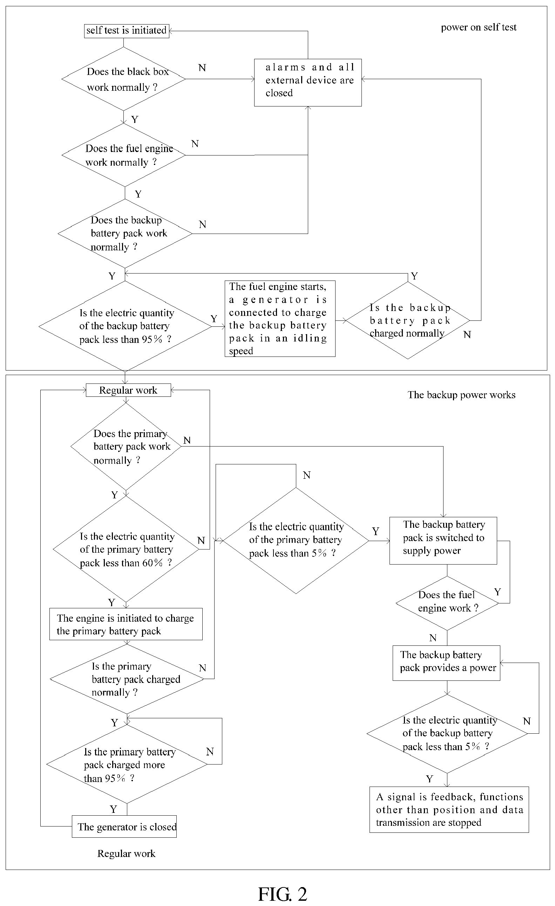

As shown in FIG. 2, a process for applying the fuel-electric hybrid power driving and management system to the unmanned vessel includes working processes as follows:

The electric power system in the fuel-electric hybrid power driving and management system of the unmanned vessel includes three working modes which are power on for self-test, normally working, and backup power, respectively.

### Power on for self-test

1. A black box, the fuel driving system, and the backup battery pack are successively detected to determine whether they work normally, if any one works improperly, it alarms and fails to work normally until the abnormality is eliminated;
2. The backup battery pack is detected to determine whether the electric quantity is sufficient, if the electric quantity is insufficient, then the fuel engine is turned on to perform an idling work by the generator, by the time, the system charges the backup battery pack.
3. In the charging process of the backup battery pack, if the backup battery pack is charged improperly, then it stops working and alarms until the failure is removed, it restarts to work and aforementioned self-test process is repeated.
4. In the charging process of the backup battery pack, if the backup battery pack is charged normally, when the backup battery pack is charged and reaches a threshold value, the fuel engine is turned off, a holding state is sent back, and a working instruction is awaited.

### Normally working

1. When in a regular working, the primary battery pack is employed to supply power, when the primary battery pack works improperly, it is directly switched to the backup battery pack for supplying power, and it works according to a work-based logic of the backup battery pack.
2. When in a regular working, the primary battery pack can work without abnormality, when the electric quantity of the primary battery pack is less than a threshold value, the generator is turned on to charge the primary battery pack.
3. When the primary battery pack is charged, if it is charged normally, when the primary battery pack is charged and the electric quantity excesses a threshold value, the generator is closed, and aforementioned process is repeated. If the charging is improperly, then an abnormity is sent back. When the electric quantity is consumed to be less than a threshold value, it is switched to the backup battery pack for supplying power, and it works according to a work-based logic of the backup battery pack.

### Backup power working

1. When in working, due to a working abnormity of the primary battery pack or it cannot be charged, the backup battery pack is switched to work (according to a self-test and a regular work logic, at the time, the electric quantity of the backup battery pack remains above a present threshold value), at the time, the backup battery pack merely provides functions such as a control of the control system, and a data transmission of the communication system of the unmanned vessel. It does not provide power, the power is merely provided by the fuel driving system;
2. When it is switched to the backup battery pack, if the fuel engine does not work (the fuel is exhausted or the fuel engine works improperly), thus the backup battery pack provides a power to drive (for homeward voyage, not for working).
3. In the process of taking advantage of the backup battery pack to provide a homeward voyage power, if the electric quantity of the backup battery pack is less than a preset threshold value, the backup battery pack does not supply power to drive, the residual electricity of the backup battery pack merely provides functions of a location and a data transmission of the unmanned vessel, for positioning to rescue.

When the navigational speed of the unmanned vessel is greater than a preset threshold value or the electric quantity of the primary battery pack is less than a preset threshold value, the high speed fuel driving system starts to work. At the same time, the electric driving system stops or provides a subsidiary work. The fuel engine starts to charge the primary battery pack by the generator. When the primary battery pack has been charged completely, it can be switched to the electric driving according to a requirement.

The communication system of the unmanned vessel receives a control signal from a ground base station, and controls and switches the fuel engine and the motor according to a required speed of the vessel. A real time control of a switch of the fuel-electric power system by user or the operator of the unmanned vessel is not required, and a remote control can be realized.

The present disclosure can be applied to a power system control field.

## Claims

1. A fuel-electric hybrid power driving and management system, comprising:
a fuel driving system comprising: an electronically controlled switch of a fuel engine, the said fuel engine, a fuel supply tank, and an electronically controlled throttle; and
at least one electric driving system comprising a primary battery pack, a motor, and a speed regulating device;
wherein the said system further comprises a control system and a power management system, the said power management system, the said speed regulating device, the said electronically controlled switch of the said fuel engine, and the said electronically controlled throttle are all electrically connected to the said control system, and the said electronically controlled switch of the said fuel engine, the said fuel engine, the said electronically controlled throttle, and the said primary battery pack are all connected to the said power management system in an electronically controlled manner.

2. The said fuel-electric hybrid power driving and management system according to claim 1, further comprising a backup battery pack electrically connected to the said power management system.

3. The said fuel-electric hybrid power driving and management system according to claim 1, wherein a generator is provided on an output shaft of the said fuel engine, the said generator is electrically connected to the said power management system.

4. The said fuel-electric hybrid power driving and management system according to any one of claim 1 to claim 3, wherein the said power management system comprises two power management modules, the said two power management modules are electrically connected to each other by a DC/DC converter.

5. The said fuel-electric hybrid power driving and management system according to claim 4, wherein a power supply battery pack is connected between the said power management module and the said control system via the said DC/DC converter, the said power supply battery pack supplies power for the said control system.

6. An unmanned vessel, comprising:
a fuel-electric hybrid power driving and management system according to claim 1; and
a hull;
wherein opposite sides of the said hull are respectively provided with an impeller which is mounted by a pod, a number of the said electric driving systems is two, the said two electric driving systems work independently and supply power for the said impellers on opposite sides of the said hull, respectively, in the said hull, a communication system is provided, the said communication system is electrically connected to the said control system, and the said control system communicates with a ground base station via the said communication system.
